# EUROPEAN PATENT SPECIFICATION

(11) **EP 4 026 710 B1**
(45) Date of publication and mention of the grant of the patent: **18.06.2025**
(21) Application number: 21215085.8
(22) Date of filing: 16.12.2021
(51) Int. Cl.: B60H 1/00, B60H 1/32

(54) **DIRECT DRIVE PARALLEL POWER SYSTEM**
PARALLELES STROMVERSORGUNGSSYSTEM MIT DIREKTANTRIEB
SYSTÈME D'ALIMENTATION PARALLÈLE À ENTRAÎNEMENT DIRECT

(30) Priority: 31.12.2020 US 202017139024
(43) Date of publication of application: 13.07.2022
(73) Proprietor: Thermo King LLC, Minneapolis, MN 55420 (US)
(72) Inventor: NELSON, Ross T, Minneapolis, Minnesota, 55410 (US); KRANZ, Bruce H., Minneapolis 55420 (MN) (US)
(74) Representative: Haseltine Lake Kempner LLP

(56) References cited:
- EP-A1- 3 647 089
- DE-A1- 102014 212 277
- US-A- 5 105 096
- US-A1- 2016 193 991

## Description

### FIELD

This invention relates generally to a power system used to power, for example, a transport climate control system. More specifically, this invention relates to a direct drive parallel power system.

### BACKGROUND

A transport climate control system can include, for example, a transport refrigeration system (TRS) and/or a heating, ventilation and air conditioning (HVAC) system. A TRS is generally used to control an environmental condition (e.g., temperature, humidity, air quality, and the like) within a cargo space of a transport unit (e.g., a truck, a container (such as a container on a flat car, an intermodal container, etc.), a box car, a semi-tractor, a bus, or other similar transport unit). The TRS can maintain environmental condition(s) of the cargo space to maintain cargo (e.g., produce, frozen foods, pharmaceuticals, etc.). In some embodiments, the transport unit can include a HVAC system to control a climate within a passenger space of the vehicle.

A power system can be used to power a transport climate control system, stationary equipment (such as a construction lift), etc. A power system can be used to provide power when a utility power source (e.g., power grid, shore power, etc.) is not available such as, for example, during transport.

EP 3 647089 A1 discloses methods and systems for controlling an energy source for a mild hybrid system that powers a transport climate control system. The mild hybrid system includes a DC energy source configured to supply a first DC voltage to the transport climate control system. The system also includes an inverter connected to the DC energy source and configured to change the first DC voltage from the DC energy source to a first AC voltage. The system further includes a transformer connected to the inverter and configured to convert the first AC voltage to a second AC voltage. Also the system includes a motor that drives a compressor. The motor is driven by the second AC voltage, the second AC voltage is greater than the first AC voltage.

DE 10 2014 212277 A1 discloses an apparatus for preconditioning an interior of a non-electric vehicle which uses power supplied from a source external to the vehicle, such as a power grid. The non-electric vehicle includes an engine, a battery, and an electric machinepower plant that supplies electrical energy to the battery when driven by the engine. An AC/DC converter is configured to receive electrical energy from an external source and to supply such electrical energy through the battery to power the electric machine power-plant to drive the mechanically operated air conditioner when the engine is not operating.

### SUMMARY

The embodiments described herein provide a direct drive powertrain whereby a prime mover (e.g., an internal combustion engine), a motor-generator, and load(s) (e.g., a transport climate control system compressor) are all in line with each other. By using a direct drive powertrain to the load(s), power efficiency losses due to a belt-drive or due to electrical to mechanical power conversion can be avoided.

The embodiments described herein provide a direct drive parallel architecture that integrates a prime mover and an electric motor to both provide power via a drive shaft to load(s). Each of the prime mover and the electric motor can provide shaft power to the load(s) separately or together.

The embodiments described herein provide a direct drive parallel power system that can support maximum power requirements from load(s) (e.g., a transport climate control system) while reducing the size of a prime mover of the power system that may be more efficient at supplying a lower power requirement to the load(s). Accordingly, fuel efficiency of the power system of the power system can be increased.

The embodiments described herein can also provide increased fuel efficiency by allowing the power system to provide power from a battery source and inactivating operation (e.g., shut off, power off, turn off, etc.) of the prime mover.

In some embodiments, a prime mover of the direct drive parallel power system can be a small internal combustion engine (e.g., an internal combustion engine that supplies less than 19 kilowatts of mechanical power). At low loads (e.g., when the direct drive parallel powers system is not powering a compressor), a small internal combustion engine can run at a higher fuel efficiency and can avoid running at a low exhaust temperature (e.g., below 150° C) as compared to a large internal combustion engine (e.g., an internal combustion engine that supplies 19 kilowatts or greater of mechanical power). A small internal combustion engine can also require fewer emissions control components, be cheaper in price, have a lower weight, and a smaller physical size as compared to a large internal combustion engine. This can offset additional costs associated with the direct drive parallel power system including a motor-generator, a battery source, etc.

It will be appreciated that in some embodiments, a transport climate control system generally goes through stages requiring more than 19 kilowatts of power for a short period of time followed by a longer period of time requiring less than 19 kilowatts of power. In some embodiments, the direct drive parallel power system can use a small internal combustion engine (e.g., an internal combustion engine that supplies less than 19 kilowatts of mechanical power) while still supplying more than 19 kilowatts of power by using a motor-generator to supply mechanical power and/or a battery source to supply electrical power to supplement the small internal combustion engine. Accordingly, the embodiments described herein can meet, for example, Environmental Protection Agency (EPA) and CARB Final Tier 4 and/or European Non-Road Mobile Machinery (NRMM) emissions standards (including, for example, Stationary Operating Time Limit (SOTL) regulations, Zero Emission Mode Operating Time (ZEMOT) regulations, etc.) for transport climate control systems that require a less than 19 kilowatt diesel engine or a costly high complexity internal combustion engine (e.g., an internal combustion engine that requires one or more of a high cost fuel system, a full electronic engine management system, an exhaust gas recirculation (EGR) and/or diesel oxidation catalyst (DOC) aftertreatment systems, meets particulate value requirements, a diesel particulate filter (DPF), etc.). In the embodiments described herein, the direct drive parallel power system can charge a battery source during stages when less than 19 kilowatts are demanded from the transport climate control system so that the battery source can supply power to the transport climate control system when the transport climate control system is demanding more than 19 kilowatts of power.

In some embodiments, the direct drive parallel power system can be used to drive a mechanically driven compressor, particularly a direct drive compressor. In particular, a motorgenerator can be provided between a prime mover and the direct drive compressor along a drive shaft. In some embodiments, a clutch can also be provided between the prime mover and the motor-generator to allow the prime mover to be deactivated while allowing the motor-generator to mechanically power (e.g., rotate) the direct drive compressor. An advantage of using a mechanically driven compressor is that it is not limited to certain speeds of operation or require a variable frequency drive as is the case with an electrically driven compressor. Also, the mechanically driven compressor can operate at lower speeds such that an electronic throttle valve (ETV) or other modulation valve is not needed to throttle back working fluid passing through a climate control circuit of the transport climate control system. Thus, the mechanically driven compressor can operate efficiently during modulation temperature control conditions (e.g., conditions when the climate control circuit is not desired to be operating at a full climate control capacity (e.g., cooling capacity)such as when the temperature within the climate controlled space is at or near a desired setpoint temperature within the climate controlled space) by modifying the speed of the mechanically driven compressor to control climate control capacity (e.g., cooling capacity) rather than using the ETV or other modulation valve.

The direct drive parallel power system described in the embodiments herein can provide cost, volume (e.g., space, and weight) advantages over a fully electric power system while maintaining and/or exceeding an operating range over the fully electric power system.

In one embodiment, a direct drive parallel power system for powering a transport climate control system is provided. The direct drive parallel power system includes a powertrain, a battery source and a power system controller. The powertrain includes a prime mover, a motorgenerator, and a drive shaft. The prime mover is configured to generate mechanical power for powering a direct driven load of the transport climate control system via the drive shaft. The motor-generator includes a motor and a generator. The motor is configured to generate mechanical power for powering the direct driven load via the drive shaft. The battery source is electrically connected to the generator of the motor-generator. The battery source is configured to supply electrical power to the motor of the motor-generator and configured to supply electrical power to an electrically driven load of the transport climate control system. The power system controller is configured to monitor and control operation of the prime mover, the motorgenerator, and the battery source. The power system controller is configured to operate the direct drive parallel power system in a parallel operation mode in which both the prime mover and the motor-generator are instructed to concurrently supply mechanical power via the drive shaft to the direct driven load.

In another embodiment, a method for operating the direct drive parallel power system to power a transport climate control system is provided. The method includes monitoring a prime mover parameter and comparing the monitored prime mover parameter to a prime mover threshold. When the monitored prime mover parameter is less than the prime mover threshold, operating the direct drive parallel power system in the parallel operation mode to power the direct driven load of the transport climate control system. When the monitored prime mover parameter is not less than the prime mover threshold, operating the direct drive parallel power system in a prime mover operation mode to power the direct driven load.

### BRIEF DESCRIPTION OF THE DRAWINGS

References are made to the accompanying drawings that illustrate embodiments of the invention.
Figure 1A is a perspective view of a refrigerated transport unit attached to a tractor, according to one embodiment.
Figure 1B is a side view of a truck with a transport climate control system, according to one embodiment.
Figure 1C is a side view of a van with a transport climate control system, according to one embodiment.
Figure 1D is a perspective view of a passenger vehicle including a climate control system, according to one embodiment.
Figure 1E illustrates a perspective view of a container that includes a transport climate control system, according to one embodiment.
Figure 2A is a schematic diagram of a direct drive parallel power system, according to a first embodiment.
Figure 2B is a schematic diagram of a direct drive parallel power system, according to a second embodiment.
Figure 3 illustrates a flow chart of a method for operating a direct drive parallel power system, according to one embodiment.
Figure 4 is a schematic diagram of a climate control circuit, according to one embodiment.

Like reference numbers represent like parts throughout.

### DETAILED DESCRIPTION

A transport climate control system is generally used to control one or more environmental conditions such as, but not limited to, temperature, humidity, air quality, or combinations thereof, of a transport unit. Examples of transport units include, but are not limited to a truck, a container (such as a container on a flat car, an intermodal container, a marine container, a rail container, etc.), a box car, a semi-tractor, a passenger vehicle, or other similar transport unit. A climate controlled transport unit can be used to transport perishable items such as pharmaceuticals, produce, frozen foods, and meat products and/or can be used to provide climate comfort for passengers in a passenger space of a passenger vehicle. The transport climate control system may include a vapor-compressor type climate controlled system, a thermal accumulator type system, or any other suitable climate controlled system that can use a working fluid (e.g., refrigerant, etc.), cold plate technology, or the like.

A transport climate control system can include a climate control unit (CCU) attached to a transport unit to control one or more environmental conditions (e.g., temperature, humidity, air quality, etc.) of a climate controlled space of the climate controlled transport unit. The CCU can include, without limitation, a climate control circuit (including, for example, a compressor, a condenser, an expansion valve, and an evaporator), and one or more fans or blowers to control the heat exchange between the air within the climate controlled space and the ambient air outside of the climate controlled transport unit.

In some embodiments, the power system can be a generator set. A generator set ("genset") generally includes the combination of a prime mover (e.g., an engine such as an internal combustion engine like a diesel engine) with an electrical machine (e.g., a generator) that can be used to generate electrical power. As described in more detail below, a generator set can also include a battery source that can also be used to generate electrical power. A genset can be used to power one or more loads (e.g., a transport climate control system) when a utility power source is unavailable.

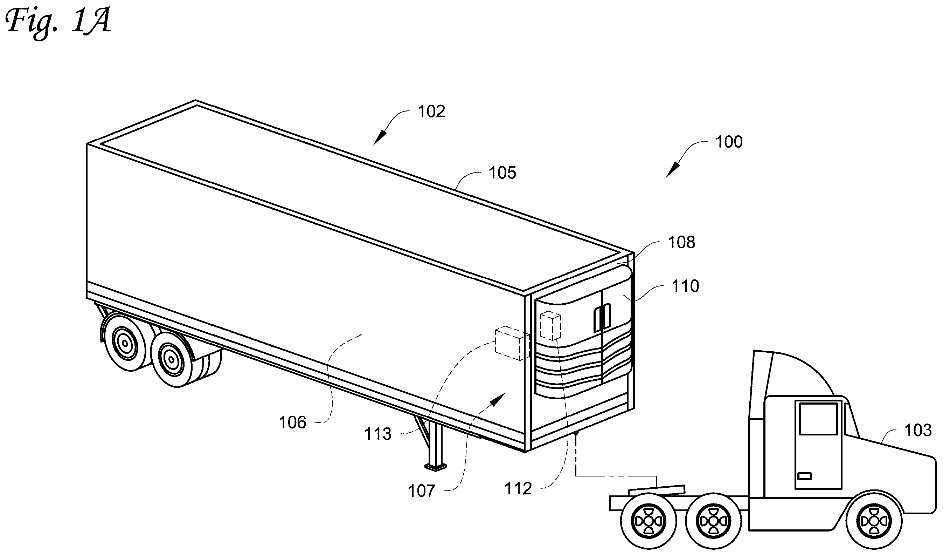

Figures 1A - 1E show various transport climate control systems. It will be appreciated that the embodiments described herein are not limited to the examples provided below, but can apply to any type of transport unit (e.g., a truck, a container (such as a container on a flat car, an intermodal container, a marine container, etc.), a box car, a semi-tractor, a passenger bus, or other similar transport unit), etc.

Figure 1A illustrates one embodiment of a climate controlled transport unit 102 attached to a tractor 103. The climate controlled transport unit 102 includes a climate control system 100 for a transport unit 105. The tractor 103 is attached to and is configured to tow the transport unit 105. The transport unit 105 shown in Figure 1A is a trailer.

The transport climate control system 100 includes a climate control unit (CCU) 110 that provides environmental control (e.g. temperature, humidity, air quality, etc.) within a climate controlled space 106 of the transport unit 105. The climate control system 100 also includes a programmable climate controller 107 and one or more sensors (not shown) that are configured to measure one or more parameters of the climate control system 100 (e.g., an ambient temperature outside of the transport unit 105, a space temperature within the climate controlled space 106, an ambient humidity outside of the transport unit 105, a space humidity within the climate controlled space 106, etc.) and communicate parameter data to the climate controller 107.

The transport climate control system 100 can operate in multiple operation modes including, for example, a continuous cooling mode, a start/stop cooling mode, a heating mode, a defrost mode, a null mode, etc. When operating in a continuous cooling mode and/or a start-stop cooling mode, the transport climate control system 100 can operate in a pulldown setting and in a steady-state setting. The pulldown setting generally occurs when, for example, the climate controlled space 106 is being cooled from an ambient temperature down to a desired set-point temperature so that the transport climate control system 100 can bring the temperature down to the desired set-point temperature as quickly as possible. The steady-state setting generally occurs when, for example, the climate in the climate controlled space 106 has already reached or is close to approaching a desired set-point temperature and the transport climate control system 100 is working to maintain the desired set-point temperature.

The CCU 110 is disposed on a front wall 108 of the transport unit 105. In other embodiments, it will be appreciated that the CCU 110 can be disposed, for example, on a rooftop or another wall of the transport unit 105. The CCU 110 includes a transport climate control circuit (not shown) that connects, for example, a compressor, a condenser, an evaporator and an expander (e.g., expansion valve) to provide conditioned air within the climate controlled space 106.

The climate controller 107 may comprise a single integrated control unit 112 or may comprise a distributed network of climate controller elements 112, 113. The number of distributed control elements in a given network can depend upon the particular application of the principles described herein. The climate controller 107 is configured to control operation of the climate control system 100 including the transport climate control circuit.

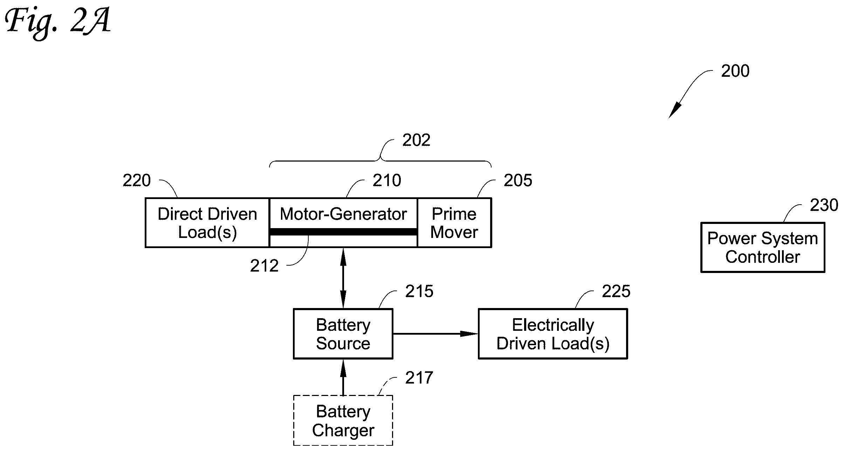

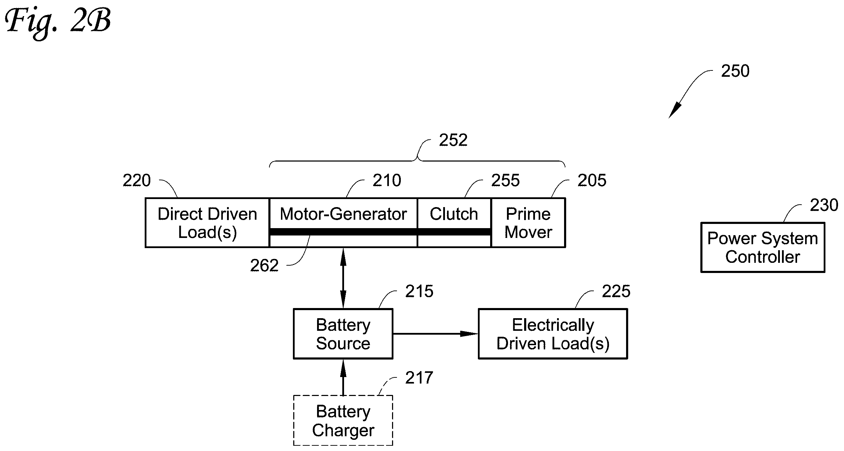

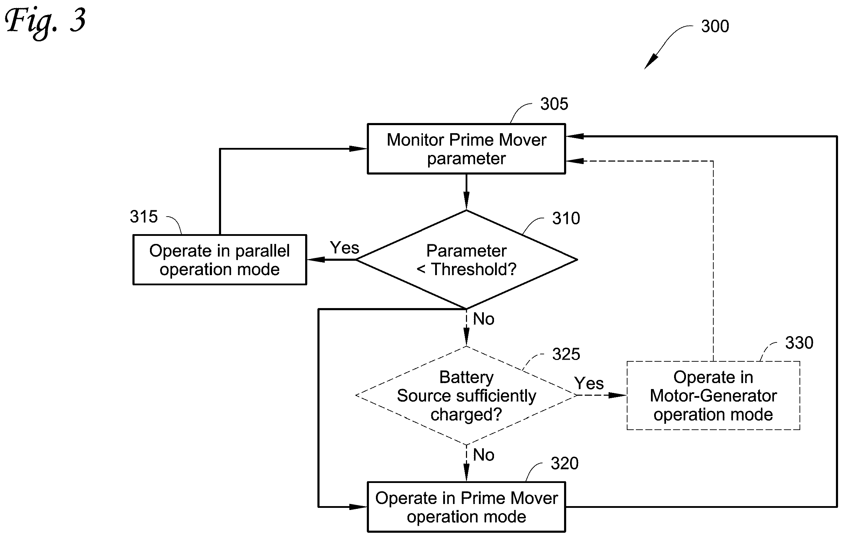

The climate control system 100 is powered by a power system that can distribute power to the climate control system 100 when a utility power source is unavailable. In some embodiments, the power system can be housed within the CCU 110. In some embodiments, the power system can be a generator set (not shown) attached to the transport unit 105 and connected to one or more components of the climate control system 100 (e.g., a compressor, one or more fans and/or blowers, the climate controller 107, one or more sensors, etc.). the power system can is a direct drive parallel power system as discussed in further detail below with respect to Figures 2A, 2B and 3A and 3B.

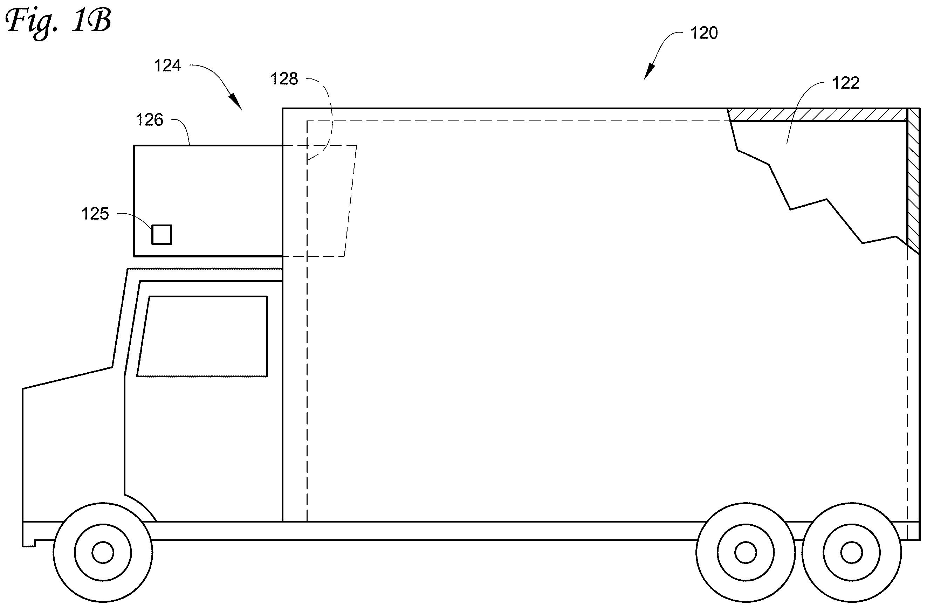

Figure 1B is a side view of a truck 120 with a transport climate control system 124, according to an embodiment. The truck 120 includes a climate controlled space 122 for carrying cargo. The transport climate control system 124 includes a CCU 126 that is mounted to a front wall 128 of the climate controlled space 122. The CCU 126 can include, among other components, a climate control circuit (not shown) that connects, for example, a compressor, a condenser, an evaporator, and an expander (e.g., expansion valve) to provide climate control within the climate controlled space 122. In an embodiment, the CCU 126 can be a transport refrigeration unit.

The transport climate control system 124 also includes a programmable climate controller 125 and one or more climate control sensors (not shown) that are configured to measure one or more parameters of the transport climate control system 124 (e.g., an ambient temperature outside of the truck 120, an ambient humidity outside of the truck 120, a compressor suction pressure, a compressor discharge pressure, a supply air temperature of air supplied by the CCU 126 into the climate controlled space 122, a return air temperature of air returned from the climate controlled space 122 back to the CCU 126, a humidity within the climate controlled space 122, etc.) and communicate climate control data to the climate controller 125. The one or more climate control sensors can be positioned at various locations outside the truck 120 and/or inside the truck 120 (including within the climate controlled space 122).

The transport climate control system 124 can operate in multiple operation modes including, for example, a continuous cooling mode, a start/stop cooling mode, a heating mode, a defrost mode, a null mode, etc. When operating in a continuous cooling mode and/or a start-stop cooling mode, the transport climate control system 124 can operate in a pulldown setting and in a steady-state setting. The pulldown setting generally occurs when, for example, the climate controlled space 122 is being cooled from an ambient temperature down to a desired set-point temperature so that the transport climate control system 124 can bring the temperature down to the desired set-point temperature as quickly as possible. The steady-state setting generally occurs when, for example, the climate in the climate controlled space 122 has already reached or is close to approaching a desired set-point temperature and the transport climate control system 124 is working to maintain the desired set-point temperature.

The climate controller 125 is configured to control operation of the transport climate control system 124 including components of the climate control circuit. The climate controller 125 may include a single integrated control unit or may include a distributed network of climate controller elements (not shown). The number of distributed control elements in a given network can depend upon the particular application of the principles described herein. The measured parameters obtained by the one or more climate control sensors can be used by the climate controller 125 to control operation of the climate control system 124.

The climate control system 124 is powered by a power system that can distribute power to the climate control system 124 when a utility power source is unavailable. In some embodiments, the power system can be housed within the CCU 126. In some embodiments, the power system can be housed within the truck 120 and connected to one or more components of the climate control system 124 (e.g., a compressor, one or more fans and/or blowers, the climate controller 145, one or more sensors, etc.). In some embodiments, the power system can be a generator set (not shown) attached to the truck 120 and connected to one or more components of the climate control system 124 (e.g., a compressor, one or more fans and/or blowers, the climate controller 125, one or more sensors, etc.). The power system is a direct drive parallel power system as discussed in further detail below with respect to Figures 2A, 2B and 3A and 3B.

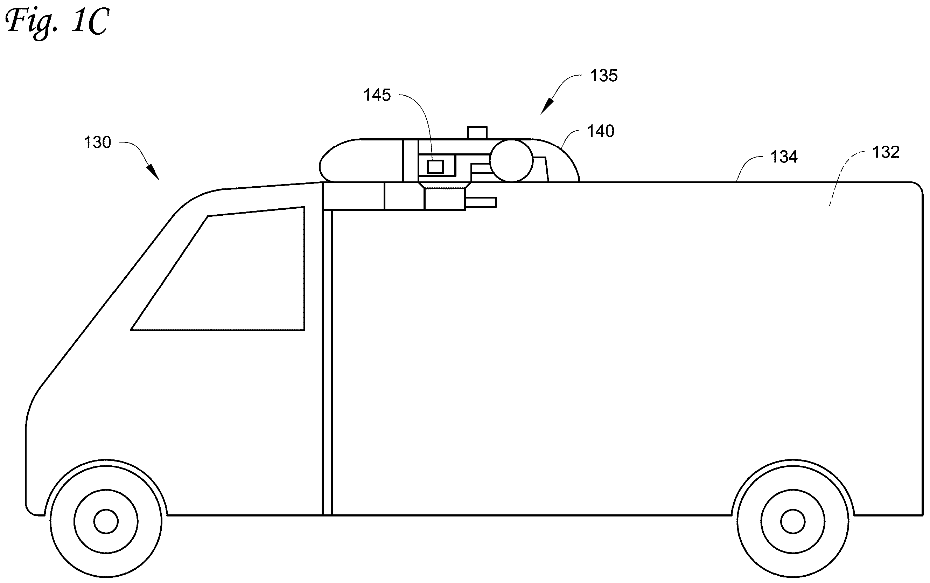

Figure 1C depicts a side view of a van 130 with a transport climate control system 135 for providing climate control within a climate controlled space 132, according to one embodiment. The transport climate control system 135 includes a climate control unit (CCU) 140 that is mounted to a rooftop 134 of the van 130. In an embodiment, the CCU 140 can be a transport refrigeration unit. The climate control system 135 also includes a programmable climate controller 145 and one or more sensors (not shown) that are configured to measure one or more parameters of the climate control system 135 (e.g., an ambient temperature outside of the van 130, a space temperature within the climate controlled space 132, an ambient humidity outside of the van 130, a space humidity within the climate controlled space 132, etc.) and communicate parameter data to the climate controller 145.

The transport climate control system 135 can include, among other components, a transport climate control circuit (not shown) that connects, for example, a compressor, a condenser, an evaporator, and an expander (e.g., an expansion valve) to provide climate control within the climate controlled space 132.

The transport climate control system 135 can operate in multiple operation modes including, for example, a continuous cooling mode, a start/stop cooling mode, a heating mode, a defrost mode, a null mode, etc. When operating in a continuous cooling mode and/or a start-stop cooling mode, the transport climate control system 135 can operate in a pulldown setting and in a steady-state setting. The pulldown setting generally occurs when, for example, the climate controlled space 132 is being cooled from an ambient temperature down to a desired set-point temperature so that the transport climate control system 135 can bring the temperature down to the desired set-point temperature as quickly as possible. The steady-state setting generally occurs when, for example, the climate in the climate controlled space 132 has already reached or is close to approaching a desired set-point temperature and the transport climate control system 135 is working to maintain the desired set-point temperature.

The climate controller 145 may comprise a single integrated control unit or may comprise a distributed network of climate controller elements (not shown). The number of distributed control elements in a given network can depend upon the particular application of the principles described herein. The climate controller 145 is configured to control operation of the climate control system 135 including the transport climate control circuit.

The climate control system 135 is powered by a power system that can distribute power to the climate control system 135 when a utility power source is unavailable. In some embodiments, the power system can be housed within the CCU 140. In some embodiments, the power system can be housed within the van 130 and connected to one or more components of the climate control system 135 (e.g., a compressor, one or more fans and/or blowers, the climate controller 145, one or more sensors, etc.). In some embodiments, the power system can be a generator set (not shown) attached to the van 130 and connected to one or more components of the climate control system 135 (e.g., a compressor, one or more fans and/or blowers, the climate controller 145, one or more sensors, etc.). The power system is a direct drive parallel power system as discussed in further detail below with respect to Figures 2A, 2B and 3A and 3B.

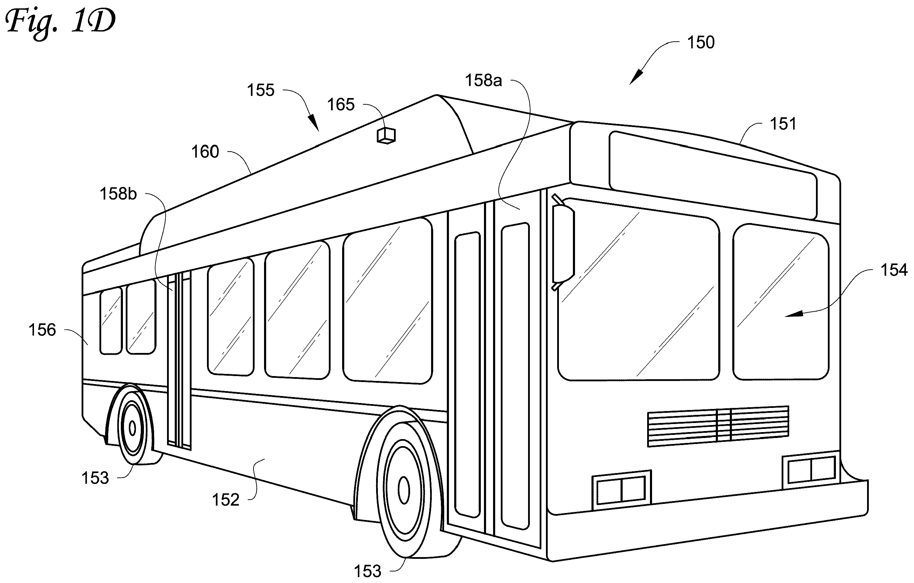

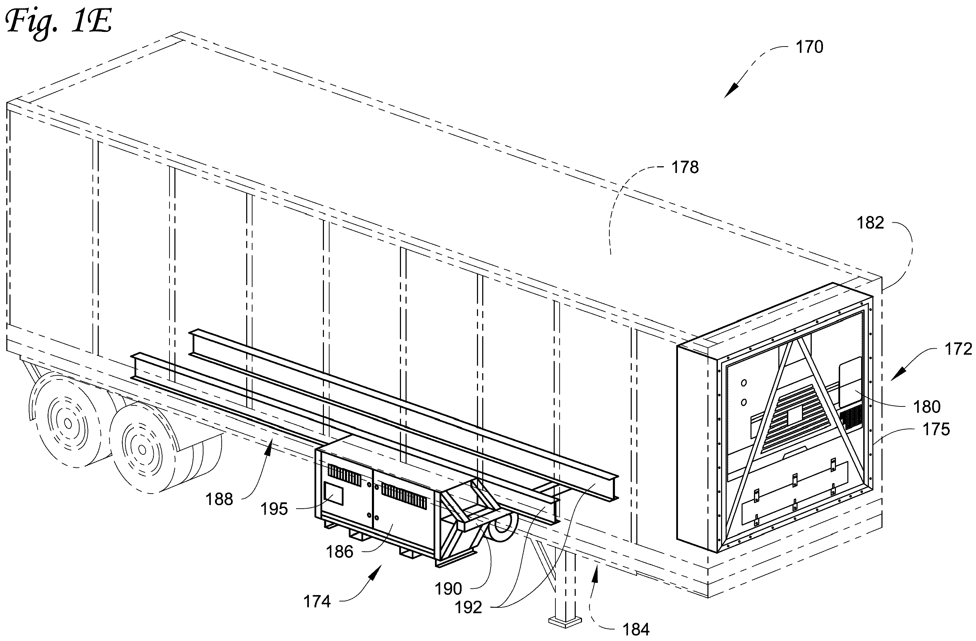

Figure 1D is a perspective view of a passenger vehicle 150 including a transport climate control system 155, according to one embodiment. In the embodiment illustrated in Figure 1E, the passenger vehicle 150 is a mass-transit bus that can carry passenger(s) (not shown) to one or more destinations. In other embodiments, the passenger vehicle 150 can be a school bus, railway vehicle, subway car, or other commercial vehicle that carries passengers. Hereinafter, the term "vehicle" shall be used to represent all such passenger vehicles, and should not be construed to limit the scope of the application solely to mass-transit buses. The transport climate control system 155 can provide climate control within a climate controlled space which in this embodiment is a passenger compartment 154.

The passenger vehicle 150 includes a frame 152, a passenger compartment 154 supported by the frame 152, wheels 153, and a compartment 156. The frame 152 includes doors 158 that are positioned on a side of the passenger vehicle 150. A first door 158a is located adjacent to a forward end of the passenger vehicle 150, and a second door 158b is positioned on the frame 152 toward a rearward end of the passenger vehicle 150. Each door 158 is movable between an open position and a closed position to selectively allow access to the passenger compartment 154.

The transport climate control system 155 includes a climate control unit (CCU) 160 that is mounted to a rooftop 151 of the passenger vehicle 150. In an embodiment, the CCU 160 can be a HVAC unit. The climate control system 155 also includes a programmable climate controller 165 and one or more sensors (not shown) that are configured to measure one or more parameters of the transport climate control system 155 (e.g., an ambient temperature outside of the passenger vehicle 150, a space temperature within the passenger compartment 154, an ambient humidity outside of the passenger vehicle 150, a space humidity within the passenger compartment 154, etc.) and communicate parameter data to the climate controller 165.

The transport climate control system 155 can include, among other components, a transport climate control circuit (not shown) that connects, for example, a compressor, a condenser, an evaporator, and an expander (e.g., an expansion valve) to provide climate control within the passenger compartment 154.

The transport climate control system 155 can operate in multiple operation modes including, for example, a continuous cooling mode, a start/stop cooling mode, a heating mode, a defrost mode, a null mode, etc. When operating in a continuous cooling mode and/or a start-stop cooling mode, the transport climate control system 155 can operate in a pulldown setting and in a steady-state setting. The pulldown setting generally occurs when, for example, the passenger compartment 154 is being cooled from an ambient temperature down to a desired set-point temperature so that the transport climate control system 155 can bring the temperature down to the desired set-point temperature as quickly as possible. The steady-state setting generally occurs when, for example, the climate in the passenger compartment 154 has already reached or is close to approaching a desired set-point temperature and the transport climate control system 155 is working to maintain the desired set-point temperature.

The climate controller 165 may comprise a single integrated control unit or may comprise a distributed network of climate controller elements (not shown). The number of distributed control elements in a given network can depend upon the particular application of the principles described herein. The climate controller 165 is configured to control operation of the climate control system 155 including the transport climate control circuit.

The climate control system 135 is powered by a power system that can distribute power to the climate control system 135 when a utility power source is unavailable. In some embodiments, the power system can be housed within the CCU 160. In some embodiments, the power system can be housed within the vehicle 150 and connected to one or more components of the climate control system 155 (e.g., a compressor, one or more fans and/or blowers, the climate controller 165, one or more sensors, etc.). In some embodiments, the power system can be a generator set (not shown) attached to the passenger vehicle 150 and connected to one or more components of the climate control system 155 (e.g., a compressor, one or more fans and/or blowers, the climate controller 165, one or more sensors, etc.). The power system is a direct drive parallel power system as discussed in further detail below with respect to Figures 2A, 2B and 3A and 3B.

The compartment 156 is located adjacent the rear end of the passenger vehicle 150, can include the power system. In some embodiments, the compartment 156 can be located at other locations on the vehicle 150 (e.g., adjacent the forward end, etc.).

Figure 1E illustrates one embodiment of an intermodal container 170 with a transport climate control system 172 and a power system 174. The intermodal container 170 can be used across different modes of transport including, for example, ship, rail, tractor-trailer, etc.

The transport climate control system 172 includes a climate control unit (CCU) 175 that provides environmental control (e.g. temperature, humidity, air quality, etc.) within a climate controlled space 178 of the intermodal container 170. The climate control system 172 also includes a programmable climate controller 180 and one or more sensors (not shown) that are configured to measure one or more parameters of the climate control system 172 (e.g., an ambient temperature outside of the intermodal container 170, a space temperature within the climate controlled space 178, an ambient humidity outside of the intermodal container 170, a space humidity within the climate controlled space 178, etc.) and communicate parameter data to the climate controller 180.

When operating in a continuous cooling mode and/or a start-stop cooling mode, the transport climate control system 172 can operate in a pulldown setting and in a steady-state setting. The pulldown setting generally occurs when, for example, the climate controlled space 178 is being cooled from an ambient temperature down to a desired set-point temperature so that the transport climate control system 172 can bring the temperature down to the desired set-point temperature as quickly as possible. The steady-state setting generally occurs when, for example, the climate in the climate controlled space 178 has already reached or is close to approaching a desired set-point temperature and the transport climate control system 172 is working to maintain the desired set-point temperature.

The CCU 175 is disposed on a front wall 182 of the intermodal container 170. In other embodiments, it will be appreciated that the CCU 175 can be disposed, for example, on a rooftop or another wall of the intermodal container 170. The CCU 175 includes a transport climate control circuit (not shown) that connects, for example, a compressor, a condenser, an evaporator and an expander (e.g., expansion valve) to provide conditioned air within the climate controlled space 178.

The climate controller 180 may comprise a single integrated control unit or may comprise a distributed network of climate controller elements (not shown). The number of distributed control elements in a given network can depend upon the particular application of the principles described herein. The climate controller 180 is configured to control operation of the climate control system 172 including the transport climate control circuit.

The climate control system 172 is powered by the power system 174 that can distribute power to the climate control system 172 when a utility power source is unavailable. In this embodiment, the power system 174 is a generator set disposed on a bottom wall 184 of the intermodal container 170 and connected to one or more components of the climate control system 172 (e.g., a compressor, one or more fans and/or blowers, the climate controller 180, one or more sensors, etc.).

In this embodiment, the power system 174 includes a housing 186 attached to a frame 188 by a mounting assembly 190. The mounting assembly 190 can extend between the housing 186 and cross members 192 that are part of the frame 188. The mounting assembly 190 can be made of a high-strength material (e.g., steel, etc.) to rigidly attach the power system 174 to the intermodal container 170. The power system 174 includes a power system controller 195 that is configured to control operation of the power system 174. The power system 174 is a direct drive parallel power system as discussed in further detail below with respect to Figures 2A, 2B and 3A and 3B.

It will be appreciated that the transport climate control systems described above with respect to Figures 1A-1E can operate in multiple operation modes including, for example, a continuous cooling mode, a start/stop cooling mode (also referred to as a cycle-sentry cooling mode), a heating mode, a defrost mode, a null mode, etc.

Of particular note, in the continuous cooling mode, a transport climate control system controller is configured to instruct a compressor to continuously compress the working fluid until the temperature within the climate controlled space reaches a desired setpoint temperature. In the start-stop cooling mode, the transport climate control system controller is configured to instruct the compressor to operate in a periodic cycle in which during each cycle the compressor is configured to compress the working fluid for a first period of time and then the compressor is configured to stop compressing the working fluid for a second period of time. The compressor will continue to cycle between compressing the working fluid and not compressing the working fluid until the temperature within the climate controlled space reaches the desired setpoint temperature. In some embodiments, the compressor is configured to compress the working fluid and direct the compressed working fluid from the compressor to the condenser during the start portion and configured to not compress working fluid during the stop portion. In some embodiments, during the stop portion of the start-stop cooling mode fan(s) of the condenser and the evaporator are turned off and are not operating.

It will be appreciated that the amount of power demanded from the transport climate control system varies depending on whether the transport climate control system is operating in the start portion of the start-stop cooling mode or the stop portion of the start-stop cooling mode. Particularly, the amount of power demanded by the transport climate control system during the start portion can be at or near a wide-open throttle (e.g., the prime mover operating at peak torque) of a prime mover of a power system and can be below the wide-open throttle of the prime mover during the stop portion. Accordingly, the prime mover can operate with increased fuel efficiency during the start portion and can operate with decreased fuel efficiency during the stop portion.

Figures 2A and 2B illustrate different embodiments of a direct drive parallel power system 200, 250 that can be used to power a transport climate control system (e.g. the transport climate systems 100, 124, 135, 155 and 172 shown in Figures 1A-E). The direct drive parallel power system 200 includes a power train 202 that includes a prime mover 205, a motor-generator 210, and a drive shaft 212. The direct drive parallel power system 200 also includes a battery source 215 that is electrically connected to the motor-generator 210. The direct drive parallel power system 200 can also include an optional battery charger 217 that is configured to be electrically connected to the battery source 215. Also, the direct drive parallel power system 200 includes a power system controller 230 configured to monitor and control operation of the direct drive parallel power system 200.

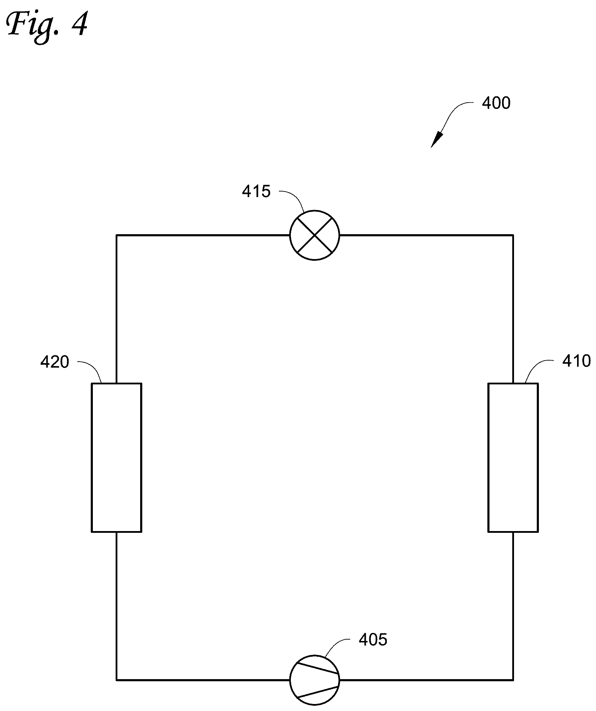

The direct drive parallel power system 200 can be used (via the drive shaft 212 of the powertrain 202) to supply mechanical power to one or more direct driven loads 220. Mechanical power can be supplied to the one or more direct driven loads 220 via the drive shaft 212 of the powertrain 202. The drive shaft 212 can receive mechanical power directly from the prime mover 205, directly from the motor-generator 210, or directly from both of the prime mover 205 and the motor-generator 210. The direct drive parallel power system 200 can also be used (via the electrical machine 210 and the battery source 215) to supply electrical power to one or more electrically driven loads 225. In some embodiments, the one or more direct driven load 220 can include a direct drive compressor that is configured to compress a working fluid (e.g., refrigerant) passing through a climate control circuit (see, for example, Figure 4). In some embodiments, the one or more direct driven load 220 can include, for example, one or more belt driven fans, blowers, etc. In some embodiments, the one or more electrically driven loads 225 can include, for example, one or more condenser fans, one or more evaporator blowers, a transport climate control system controller, a telematics unit, one or more electric heater bars (that can be mounted in an evaporator compartment and activated with an evaporator fan to provide heat within the climate controlled space), etc.

The prime mover 205 is configured to generate mechanical power that can be used to supply power to the one or more direct driven loads 220 via the drive shaft 212. In some embodiments, the prime mover 205 can be an internal combustion engine such as, for example, a diesel engine, gasoline engine, a compressed natural gas (CNG) engine, a liquid nitrogen gas (LNG) engine, etc. In some embodiments, the prime mover 205 can be a mechanical injection engine that uses a mechanical governor to control operation of the engine. In some embodiments, the prime mover 205 can be a mechanical injection engine that uses an electronic governor and an engine control unit (ECU) to control and monitor operation of the engine. In some embodiments, the prime mover 205 can be a common rail injection engine that uses an electronic injection and an engine control unit (ECU) to control and monitor operation of the engine.

In some embodiments, the prime mover 205 can be a small diesel engine that supplies less than 19 kilowatts of mechanical power. In some embodiments, the prime mover 205 can be a large diesel engine that supplies 19 kilowatts or more of mechanical power.

It will be appreciated that the prime mover 205 can be most efficient when operating close to wide-open throttle (e.g., peak torque) and then drops off slightly as the prime mover 205 reaches peak torque. Operating close to wide-open throttle can be at a percent torque between, for example, 80-95% of peak torque. However, in many situations, the load(s) (including the one or more direct driven loads 220, the one or more electrically driven loads 225, etc.) demanding power from the direct drive parallel power system 200 are not demanding power at a level for the prime mover 205 to operate with a wide-open throttle and the load(s) may not be in communication with the direct drive parallel power system 200.

By using a small diesel engine rather than a large diesel engine, the power system can operate more frequently closer to peak torque and the small diesel engine's optimal efficiency point. By increasing the amount of time that the prime mover 205 is operated at a wide-open throttle, the fuel efficiency of the power system can be achieved. Also, avoiding operation of the prime mover 205 during a low load demand can prevent rapid formation of exhaust deposits on, for example, injector tips, exhaust piping, an exhaust gas recirculation (EGR) cooler, an EGR valve, EGR piping, an exhaust manifold, a diesel oxidation catalyst (DOC), exhaust gas sensors, and other related components of the power system that can occur when the prime mover 205 is running and there is low load demand. These deposit formations can degrade performance and efficiency of the prime mover 205 and can increase maintenance intervals.

The motor-generator 210 includes a motor that is configured to receive electrical power from the battery source 215 and generate mechanical power that can be used to supply power to the one or more direct driven loads 220 via the drive shaft 212. The motor-generator 210 also includes a generator that is configured to receive and convert mechanical power generated by the prime mover 205 via the drive shaft 212 into electrical power and supply the electrical power to charge the battery source 215. In some embodiments, the motor-generator 210 is configured to convert mechanical power generated by the prime mover 205 into direct current (DC) power for charging the battery source 215. In some embodiments, the motor-generator 210 can be a small motor-generator (e.g., an approximately 6-7 kilowatt motor-generator). In these embodiments, the motor-generator 210 can supplement the prime mover 205 during high power demand situations (e.g., load demand is greater than 19 kilowatts) and can operate without assistance of the prime mover 205 during low demand situations (e.g., load demand is less than 19 kilowatts). In some embodiments, the motor-generator 210 can be a large motor-generator (e.g., an approximately 14-15 kilowatt motor-generator). In these embodiments, the motor-generator 210 can supplement the prime mover 205 during high power demand situations (e.g., load demand is greater than 19 kilowatts) and can operate without assistance of the prime mover 205 during low demand situations (e.g., load demand is less than 19 kilowatts). In addition, when the power system 200, 250 includes an optional battery charger 21 that is plugged into a utility power source, the motor-generator 210 has sufficient power generating capabilities to operate without assistance of the prime mover 205 during high power demand situations (e.g., load demand is greater than 19 kilowatts) such that the one or more direct driven loads 220 (via the motorgenerator 210) and the one or more electrically driven loads 225 can be operating from the utility power source.

The battery source 215 is configured to supply electrical power to the one or more electrically driven loads 225. In some embodiments, the battery source 215 is configured to supply DC power to the one or more electrically driven loads 225. In some embodiments, for example, when the motor-generator 210 is a small motor-generator, the battery source 215 can be a small battery source (e.g., an approximately 44-52 Volt battery source). In some embodiments, for example, when the motor-generator 210 is a large motor-generator, the battery source 215 can be a large battery source (e.g., an approximately 300-400 Volt battery source).

The power system controller 230 is configured to monitor and control operation of the direct drive parallel power system 200. In particular, the power system controller 230 is configured to control operation of the prime mover 205, the motor-generator 210, the battery source 215, and the optional battery charger 217. Also, the power system controller 230 can monitor how the prime mover 205 is operating and can switch between operation modes based on operation of the prime mover 205.

The operation modes can include a prime mover operation mode in which the prime mover 205 is activated and configured to generate mechanical power and the motor of the motorgenerator 210 is deactivated. In the prime mover operation mode, the generated mechanical power from the prime mover 205 can then be transferred to the one or more direct driven loads 220 via the drive shaft 212. Also, a portion of the generated mechanical power from the prime mover 205 can be transferred to the generator of the motor-generator 210, whereby the mechanical power is converted into electrical power and can be used for charging the battery source 215. The operation modes includes a parallel operation mode in which both the prime mover 205 and the motor of the motor-generator 210 is activated so that both the prime mover 205 and the motor-generator 210 are configured to generate mechanical power. In the parallel operation mode, both the generated mechanical power from the prime mover 205 and the motorgenerator 210 can then be transferred in parallel to the one or more direct driven loads 220 via the drive shaft 212.

Figure 2B illustrates a direct drive parallel power system 250 includes a powertrain 252 that is similar to the powertrain 202 but also includes a clutch 255 disposed between the prime mover 205 and the motor-generator 210 along a drive shaft 262. The clutch 255 is configured to engage and disengage the prime mover 205 from the drive shaft 262 of the powertrain 252. The power system controller 230 is configured to control operation of the clutch 255.

By including the clutch 255, the power system controller 230 can include a motorgenerator operation mode in which the motor of the motor-generator 210 is activated and configured to generate mechanical power and the prime mover 205 is deactivated and disengaged from the drive shaft 262. In the motor-generator operation mode, the generated mechanical power from the motor-generator 210 can then be transferred to the one or more direct driven loads 220 via the drive shaft 262. As the power system 200 shown in Figure 2A does not include a clutch it cannot operate in the motor-generator operation mode even if the prime mover 205 is deactivated because the prime mover 205 remains engaged to the rotating drive shaft 262 and the motor-generator 210 would be attempting to turn over the prime mover 205. An advantage of the motor-generator operation mode is that fuel efficiency of the prime mover 205 can be improved by deactivating the prime mover 205 when load demands from the one or more direct driven loads 220 and the one or more electrically driven loads 225 are relatively low. When the prime mover 205 is active, it can provide power for the direct driven loads 220 and/or the electrically driven loads 225 via the motor-generator 210 as well as for charging the battery source 215 in order to allow itself to operate at a higher torque level and better efficiency point that is near peak torque. When the battery source 210 is fully charged, the prime mover 205 can deactivate and the one or more electrically driven loads 225 and/or the one or more direct driven loads 220 (via the motor-generator 210) can be operated from battery source 215 only for a period of time until the battery source 215 needs to be recharged again.

Also, in some embodiments, the direct drive parallel power system 250 can be used in geographical areas where, for example, a diesel engine is only allowed to run for a specified period of time or not allowed to run at all, there are low noise regulations, etc. In these embodiments, the direct drive parallel power system 250 can operate in the motor-generator operation mode while still providing sufficient power to operate the transport climate control system.

An advantage of the direct drive parallel power system 250 is that the prime mover 205 is not required to operate when load(s) (including the one or more direct driven loads 220, the one or more electrically driven loads 225, etc.) demanding power from the direct drive parallel power system 250 is low (e.g., less than 20% prime mover load) or not demanding power at all. That is, the power system controller 230 can instruct the motor-generator 210 to supply power to the one or more direct driven loads 220 and/or instruct the battery source 215 to supply power to the one or more electrically driven loads 225 while instructing the prime mover 205 to shut off when the power demanded by the load(s) is less than a certain threshold (e.g., less than 20% prime mover load). Accordingly, the prime mover 205 can be deactivated during periods of time where power demand is low to avoid low fuel efficiency conditions while still allowing one or more direct driven loads 220 (e.g., a direct drive compressor) to receive power (i.e., from the motorgenerator 210).

In some embodiments, the direct drive parallel power systems 200, 250 can include an optional battery charger 217. The optional battery charger 217 can plug into a utility power source (not shown) when available to charge and provide power to the battery source 215. This would allow the battery source 215 to power a motor of the motor-generator 210 (and thereby the one or more direct driven loads 220) as well as to power the electrically driven loads 225. Accordingly, the battery charger 217 could be used to provide utility power to the battery source 215 while operating in the parallel operation mode and/or a motor-generator operation mode. It will be appreciated that the optional battery charger 217 can be a modular addition to the direct drive parallel power systems 200, 250 by a preferred service technician after manufacturing.

Figure 3 illustrates a flowchart of a method 300 for operating the direct drive parallel power system 200, 250, according to one embodiment. The method 300 begins at 305, whereby the power system controller 230 is configured to monitor a prime mover parameter indicating how the prime mover 205 is operating.

In some embodiments, (e.g., when the prime mover 205 is a mechanical injection diesel engine with a mechanical governor, etc.) the prime mover parameter can be a speed (e.g., revolutions per minute (RPM)) of the prime mover 205. In these embodiments, the power systems 200, 250 can include a speed sensor configured to monitor the speed of the prime mover 205 and communicate monitored speed data to the power system controller 230. It will be appreciated that the prime mover speed can decrease when the prime mover 205 is at or near peak torque (e.g., at or near full speed) such as during high power demand situations (e.g., load demand is greater than 19 kilowatts) and that the prime mover speed can increase when the prime is operating below peak torque (e.g., below full speed) such as during low power demand situations (e.g., load demand is less than 19 kilowatts).

In some embodiments, (e.g., when the prime mover 205 is a mechanical injection diesel engine with an electric governor and an ECU, when the prime mover 205 is a common rail diesel engine with an electronic injection and an ECU, etc.) the prime mover parameter can be a prime mover percent load of the prime mover 205. The prime mover percent load (PM%LOD) can indicate, for the current speed of the prime mover 205, the amount of air/fuel delivery going through the prime mover 205 relative to the amount of air/fuel delivery going to the prime mover 205 at a wide-open throttle (e.g., the prime mover operating at peak torque). That is, the prime mover percent load can indicate a percentage of peak available torque of the prime mover 205. In these embodiments, the power system controller 230 can communicate directly with the ECU of the prime mover 205 to obtain prime mover percent load data.

The method 300 then proceeds to 310.

At 310, the power system controller 230 compares the monitored prime mover parameter data with a prime mover threshold. The prime mover threshold can be set to a value that indicates whether the prime mover 205 is operating at or near a wide-open throttle (e.g., the prime mover operating at peak torque). It will be appreciated that the prime mover threshold can be a predefined value determined based on, for example, simulation data, field testing, etc. for the specific type of prime mover being used. In one example, the prime mover threshold can be a predefined percent torque value set somewhere between, for example, 80-95% of peak torque.

In another example, when the prime mover parameter is the speed of the prime mover 205, the power system controller 230 can determine whether the monitored prime mover data (e.g., prime mover speed) is greater than a prime mover threshold (e.g., a prime mover speed threshold). It will be appreciated that the prime mover speed threshold can be a predefined value determined based on, for example, simulation data, field testing, etc. for the specific type of prime mover being used. In some embodiments, such as when the prime mover 205 is a mechanically driven diesel engine (or in some cases an electrically driven diesel engine), the speed of the prime mover 205 when operating at a full-load condition (e.g., at or near peak torque) has been found to drop about 9-10% below the speed of the prime mover 205 when operating under a no-load condition. For example, if the prime mover 205 is operating at a no-load condition speed of 2425 RPM, the prime mover speed can drop to about 2200 RPM when operating at a full-load condition. Accordingly, in some embodiments, the prime mover threshold can be set to a speed that would indicate that the prime mover 205 is no longer operating at a full-load condition and may be approaching a no-load condition. If the speed of the prime mover 205 is 2425 RPM at a no-load condition, the prime mover threshold can be set to, for example, around 2350 RPM.

When the power system controller 230 determines that monitored prime mover parameter data (e.g., prime mover speed) is greater than the prime mover threshold (e.g., prime mover speed threshold) (thereby indicating that the prime mover 205 is operating or approaching a no-load condition), the method 300 proceeds to 315. When the power system controller 230 determines that monitored prime mover parameter data (e.g., prime mover speed) is not greater than the prime mover threshold (e.g., prime mover speed threshold) (thereby indicating that the prime mover 205 is operating at or near a full-load condition (e.g., at or near peak torque)), the method 300 proceeds to 320. It will be appreciated, that when the power system includes the clutch 255 (e.g., the power system 250), the method 300 proceeds to 325 instead of 320 when the power system controller 230 determines that monitored prime mover parameter data is not greater than the prime mover threshold.

In yet another example, when the prime mover parameter is a prime mover percent load of the prime mover 205, the power system controller 230 can determine whether the monitored prime mover data (e.g., prime mover percent load) is less than a prime mover threshold (e.g., a prime mover percent load threshold). It will be appreciated that the prime mover percent load threshold can be a predefined value determined based on, for example, simulation data, field testing, etc. for the specific type of prime mover being used. In some embodiments, the prime mover percent load threshold can be set to a predefined value between, for example, 25-30%. Thus, when prime mover percent load drops below the prime mover percent load threshold, the power system controller can determine that the prime mover 205 is not operating at a full-load condition and is approaching or near a no-load condition.

When the power system controller 230 determines that monitored prime mover parameter data (e.g., prime mover percent load) is less than the prime mover threshold (e.g., prime mover percent load threshold), the method 300 proceeds to 315. When the power system controller 230 determines that monitored prime mover parameter data (e.g., prime mover percent load) is not less than the prime mover threshold (e.g., prime mover percent load threshold), the method 300 proceeds to 320. It will be appreciated, that when the power system includes the clutch 255 (e.g., the power system 250), the method 300 proceeds to 325 instead of 320 when the power system controller 230 determines that monitored prime mover parameter data is not less than the prime mover threshold.

At 315, the power system controller 230 determines that the load demand on the prime mover 205 is not sufficient to allow the prime mover 205 to be capable of operating at or near a wide-open throttle (i.e., the prime mover 205 is not operating efficiently). Accordingly, the power system controller 230 operates the direct drive parallel power system 200, 250 in a parallel operation mode such that both the prime mover 205 and the motor of the motorgenerator 210 can concurrently provide mechanical power to the one or more direct driven loads 220 via the driveshaft 212, 262. It will be appreciated that the battery source 215 is configured to supply electrical power to the motor of the motor-generator 210 to allow the motor of the motor-generator 210 to provide mechanical power to the one or more direct driven loads 220. The battery source 215 can also provide electrical power to the one or more electrically driven loads 225. It will be appreciated that in some embodiments the method 300 at 315 can allow the power system controller 230 to instruct the power system controller 230 to operate in the parallel operation mode temporarily in high power demand situations such as when the transport climate control system is operating in a fast pulldown setting to cool a climate controlled space from, for example, an ambient temperature to a desired setpoint temperature within the climate controlled space. The method 300 then proceeds back to 305.

At 320, the power system controller 230 determines that the load demand on the prime mover 205 is sufficient to allow the prime mover 205 to be capable of operating at or near a wide-open throttle (i.e., the prime mover 205 is operating efficiently). Accordingly, the power system controller 230 operates the direct drive parallel power system 200, 250 in a prime mover operation mode such that the prime mover 205 without assistance from the motor-generator 210 can provide mechanical power to the one or more direct driven loads 220 via the drive shaft 212, 262. In some embodiments, the power system controller 230 can determine whether the battery source 215 is at or near a fully charged state and can instruct the prime mover 205 to charge the battery source 215 when the battery source 215 is not at or near a fully charged state (e.g., the charge level of the battery source 215 is at or below 20%). In some embodiments, the power system controller 230 can instruct the prime mover 205 to continue to charge the battery source 215 until the charge level of the battery source 215 is, for example, at or above 80%. It will be appreciated that the power system controller 230 can determine when to initiate charging of the battery source 215 and when to stop charging the battery source 215 based on, for example, a battery source manufacturer recommendation. The battery source 215 can also provide electrical power to the one or more electrically driven loads 225. The method 300 then proceeds back to 305.

At 325 (e.g., when the power system includes the clutch 255), the power system controller 230 determines whether the battery source 215 is sufficiently charged (e.g., the charge level of the battery source 215 is above a charge level threshold). In some embodiments, the charge level threshold can be, for example, 80%. It will be appreciated that the charge level threshold can be a predefined value determined based on, for example, simulation data, field testing, battery source manufacturer recommendation(s), etc. When the power system controller 230 determines that the battery source 215 is not sufficiently charged, the method 300 proceeds to 320. When the power system controller 230 determines that the battery source 215 is sufficiently charged, the method 300 proceeds to 330.

At 330, the power system controller 230 operates the direct drive parallel power system 250 in a motor-generator operation mode. Accordingly, the power system controller 230 operates the direct drive parallel power system 250 such that the motor of the motor-generator 210, without assistance from the prime mover 205, can provide power to the one or more direct driven loads 220 via the drivetrain 262. It will be appreciated that the battery source 215 is configured to supply electrical power to the motor of the motor-generator 210 to allow the motor of the motor-generator 210 to provide mechanical power to the one or more direct driven loads 220 via the driveshaft 262. The battery source 215 can also provide electrical power to the one or more electrically driven loads 225. The method 300 then proceeds back to 305.

An advantage of the method 300 is that based on monitored prime mover parameter data, a) the prime mover 205 in combination with the motor-generator 210 can concurrently supply mechanical power to the one or more direct driven loads 220, b) the prime mover 205 can supply mechanical power to the one or more direct driven loads 220 without assistance of the motorgenerator 210, and c) (optionally when then clutch 255 is available the motor-generator 210) can supply mechanical power to the one or more direct driven loads 220 without assistance of the prime mover 205. Accordingly, the power system 200, 250 can provide power to the one or more direct driven loads 220 and the one or more electrically driven loads 225 when demanded while preventing operation of the prime mover 205 in low power demand situations when the prime mover 205 may not be able to operate efficiently.

Figure 4 is a schematic diagram of a climate control circuit 400, according to one embodiment. The climate control circuit 400 generally includes a compressor 405, a condenser 410, an expander 415 (e.g., an expansion valve or the like), and an evaporator 420. The climate control circuit 400 is exemplary and can be modified to include additional components. For example, in some embodiments the climate control circuit 400 can include an economizer heat exchanger, one or more flow control devices (e.g., valves or the like), a receiver tank, a dryer, a suction-liquid heat exchanger, or the like.

The climate control circuit 400 can generally be applied in a variety of systems used to control an environmental condition (e.g., temperature, humidity, air quality, or the like) in a space (generally referred to as a climate controlled space). Examples of systems include, but are not limited to the transport climate control systems shown and described above in accordance with Figures 1A - 1E.

The components of the climate control circuit 400 are fluidly connected. The climate control circuit 400 can be specifically configured to be a cooling system (e.g., an air conditioning system) capable of operating in a cooling mode. Alternatively, the climate control circuit 400 can be specifically configured to be a heat pump system which can operate in both a cooling mode and a heating/defrost mode.

The climate control circuit 400 operates according to generally known principles. The climate control circuit 400 can be configured to heat or cool heat transfer fluid or medium (e.g., a gas such as, but not limited to, air or the like), in which case the climate control circuit 400 may be generally representative of an air conditioner or heat pump.

The compressor 405 can be, for example, a scroll compressor, a reciprocal compressor, or the like. In some embodiments, the compressor 405 can be a mechanically driven compressor. In other embodiments, the compressor 405 can be an electrically driven compressor. The compressor 405 is configured to compress a working fluid (e.g., refrigerant) and direct the working fluid through the climate control circuit 400 in order to provide temperature control within a climate controlled space (e.g., the climate controlled spaces shown in Figures 1A-1E). In particular, the compressor 405 is configured to direct the compressed working fluid that is a gas to the condenser 410.

The condenser 410 can include a condenser coil (not shown) and one or more condenser fans. The condenser 410 is configured to allow the working fluid, received from the compressor 405, to transform from a gas to a liquid by releasing heat absorbed by the working fluid into the ambient environment outside of the climate controlled space. That is, the condenser 410 is configured to cool and condense the working fluid. The condenser 410 is configured to direct the liquid working fluid to the expander 415.

The expander 415 is configured to receive the working fluid in the form of a liquid from the condenser 410 and is configured to restrict the flow of the working fluid in the form of a gas to the evaporator 420. In some embodiments, the expander 415 can be an expansion valve. The gaseous working fluid is directed by the expander 415 to the evaporator 420.

The evaporator 420 can include an evaporator coil (not shown) and one or more evaporator fans. The evaporator 420 is configured to allow the working fluid, received from the expander 415, to evaporate from a liquid to a gas by absorbing heat from the climate controlled space and thereby provide cooling to the climate controlled space.

A controller (e.g., the climate controllers shown in Figures 1A-1E) is configured to control the climate control circuit 200 to operate in a plurality of different operation modes including, for example, a continuous cooling mode, a start-stop cooling mode, a heating mode, etc.

Of particular note, in the continuous cooling mode, the controller is configured to instruct the compressor 405 to continuously compress the working fluid until the temperature within the climate controlled space reaches a desired setpoint temperature. In the start-stop cooling mode, the controller is configured to instruct the compressor 405 to operate in a periodic cycle in which during each cycle the compressor 405 is configured to compress the working fluid for a first period of time (e.g., during a start portion of the start-stop cooling mode) and then the compressor 405 is configured to stop compressing the working fluid for a second period of time (e.g., during a stop portion of the start-stop cooling mode). The compressor 405 will continue to cycle between compressing the working fluid and not compressing the working fluid until the temperature within the climate controlled space reaches the desired setpoint temperature. In some embodiments, the compressor 405 is configured to compress the working fluid and direct the compressed working fluid from the compressor 405 to the condenser 410 during the start portion and configured to not compress working fluid during the stop portion. In some embodiments, during the stop portion of the start-stop cooling mode fan(s) of the condenser 410 and the evaporator 420 are turned off and are not operating.

When operating in the continuous cooling mode and/or a start portion of the start-stop cooling mode, the compressor 405 compresses a working fluid (e.g., refrigerant or the like) from a relatively lower pressure gas to a relatively higher-pressure gas. The relatively higher-pressure and higher temperature gas is discharged from the compressor 405 and flows through the condenser 410. In accordance with generally known principles, the working fluid flows through the condenser 10 and rejects heat to a heat transfer fluid or medium (e.g., air, etc.), thereby cooling the working fluid. The cooled working fluid, which is now in a liquid form, flows to the expander 415. The expander 415 reduces the pressure of the working fluid. As a result, a portion of the working fluid is converted to a gaseous form. The working fluid, which is now in a mixed liquid and gaseous form flows to the evaporator 420. The working fluid flows through the evaporator 420 and absorbs heat from a heat transfer medium (e.g., air, etc.), heating the working fluid, and converting it to a gaseous form. The gaseous working fluid then returns to the compressor 405.

The terminology used in this description is intended to describe particular embodiments and is not intended to be limiting. The terms "a," "an," and "the" include the plural forms as well, unless clearly indicated otherwise. The terms "comprises" and/or "comprising," when used in this description, specify the presence of the stated features, integers, steps, operations, elements, and/or components, but do not preclude the presence or addition of one or more other features, integers, steps, operations, elements, and/or components.

With regard to the preceding description, it is to be understood that changes may be made in detail, especially in matters of the construction materials employed and the shape, size, and arrangement of parts without departing from the scope of the present invention. This description and the embodiments described are exemplary only, with the scope of the invention being defined by the claims that follow.

## Claims

1. A direct drive parallel power system (200, 250) for powering a transport climate control system, the direct drive parallel power system comprising:
a powertrain (202) that includes a prime mover (205), a motor-generator (210), and a drive shaft (212), wherein the prime mover is configured to generate mechanical power for powering a direct driven load (220) of the transport climate control system via the drive shaft, wherein the motor-generator includes a motor and a generator, and wherein the motor is configured to generate mechanical power for powering the direct driven load via the drive shaft;
a battery source (215) electrically connected to the generator of the motor-generator, wherein the battery source is configured to supply electrical power to the motor of the motorgenerator and configured to supply electrical power to an electrically driven load of the transport climate control system; and
a power system controller (230) configured to monitor and control operation of the prime mover, the motor-generator, and the battery source;
**characterized in that** the power system controller is configured to operate the direct drive parallel power system in a parallel operation mode in which both the prime mover and the motorgenerator are instructed to concurrently supply mechanical power via the drive shaft to the direct driven load.

2. The direct drive parallel power system of claim 1, wherein the powertrain further includes a clutch (255) disposed between the prime mover (205) and the motor-generator (210) along the drive shaft, wherein the clutch (255) is controlled via the power system controller (230) and wherein the clutch is configured to engage and disengage the prime mover from the drive shaft (212) based on instructions received from the power system controller.

3. The direct drive parallel power system of any one of claims 1 and 2, further comprising a battery charger (217) configured to connect to a utility power source for charging the battery source (215).

4. The direct drive parallel power system of any one of claims 1-3, wherein the generator of the motor-generator (210) is configured to convert mechanical power generated by the prime mover (205) into electrical power and is configured to transfer the generated electrical power to the battery source (215) for charging the battery source.

5. The direct drive parallel power system of any one of claims 1-4, wherein the power system controller (230) is configured to operate the direct drive parallel power system in a prime mover operation mode in which the prime mover (205) is instructed to supply mechanical power via the drive shaft (212) to the direct driven load (220) without assistance from the motor-generator.

6. The direct drive parallel power system of any one of claims 1-5, wherein the power system controller (230) is configured to operate the direct drive parallel power system in a motorgenerator operation mode in which the motor-generator (210) is instructed to supply mechanical power via the drive shaft (212) to the direct driven load (220) without assistance from the prime mover (205).

7. The direct drive parallel power system of any one of claims 1-6, wherein the prime mover (205) is one of: a diesel engine, a gasoline engine, a compressed natural gas (CNG) engine, and a liquid nitrogen gas (LNG) engine.

8. The direct drive parallel power system of any one of claims 1-7, wherein the direct driven load (220) is a working fluid compressor of the transport climate control system.

9. A method for operating a direct drive parallel power system (200, 250) in accordance with any of claims 1-8 to power a transport climate control system, the method comprising:
monitoring (305) a prime mover (205) parameter;
comparing (310) the monitored prime mover parameter to a prime mover threshold;
when the monitored prime mover parameter is less than the prime mover threshold, operating (315) the direct drive parallel power system in the parallel operation mode to power the direct driven load (220) of the transport climate control system, and
when the monitored prime mover parameter is not less than the prime mover threshold, operating (320) the direct drive parallel power system in the prime mover operation mode to power the direct driven load (220).

10. The method of claim 9, wherein operating (315) the direct drive parallel power system in the parallel operation mode includes:
the prime mover (205) of the direct drive parallel power system generating mechanical power; and
the drive shaft (212) of the direct drive parallel power system transferring the generated mechanical power from the prime mover to the direct driven load (220).

11. The method of any one of claims 9 and 10, wherein operating (320) the direct drive parallel power system in the prime mover operation mode includes:
the prime mover (205) of the direct drive parallel power system generating mechanical power; the motor-generator (210) of the direct drive parallel power system generating mechanical power; and
the drive shaft (212) of the direct drive parallel power system concurrently transferring the generated mechanical power from the prime mover (205) and the generated mechanical power from the motor-generator (210) to the direct driven load (220).

12. The method of any one of claims 9-11, further comprising:
determining (325) whether a battery source (215) of the direct drive parallel power system is sufficiently charged when the monitored prime mover parameter is not less than the prime mover threshold;
when the battery source (215) is sufficiently charged, operating (330) the direct drive parallel power system in a motor-generator operation mode; and
when the battery source is not sufficiently charged, operating (320) the direct drive parallel power system in the prime mover operation mode.

13. The method of claim 12, wherein operating (330) the direct drive parallel power system in the motor-generator operation mode includes:
the motor-generator (210) of the direct drive parallel power system generating mechanical power; and
the drive shaft (212) of the direct drive parallel power system transferring the generated mechanical power from the motor-generator (210) to the direct driven load (220).

14. The method of any one of claims 9-13, further comprising the battery source (215) of the direct drive parallel power system supplying electrical power to the electrically driven load ("20) of the transport climate control system.

## Patentansprüche

1. Direktantriebs-Parallelleistungssystem (200, 250) zur Leistungsversorgung eines Transportklimasteuersystems, wobei das Direktantriebs-Parallelleistungssystem Folgendes umfasst:
einen Antriebsstrang (202), der einen Primärantrieb (205), einen Motorgenerator (210) und eine Antriebswelle (212) umfasst, wobei der Primärantrieb dazu ausgelegt ist, mechanische Leistung zur Leistungsversorgung einer direkt angetriebenen Last (220) des Transportklimasteuersystems über die Antriebswelle zu erzeugen, wobei der Motorgenerator einen Motor und einen Generator umfasst, und wobei der Motor dazu ausgelegt ist, mechanische Leistung zur Leistungsversorgung der direkt angetriebenen Last über die Antriebswelle zu erzeugen;
eine Batteriequelle (215), die elektrisch mit dem Generator des Motorgenerators verbunden ist, wobei die Batteriequelle dazu ausgelegt ist, dem Motor des Motorgenerators elektrische Leistung zuzuführen, und dazu ausgelegt ist, einer elektrisch angetriebenen Last des Transportklimasteuersystems elektrische Leistung zuzuführen; und
eine Leistungssystemsteuerung (230), die dazu ausgelegt ist, einen Betrieb des Primärantriebs, des Motorgenerators und der Batteriequelle zu überwachen und zu steuern;
**dadurch gekennzeichnet, dass** die Leistungssystemsteuerung dazu ausgelegt ist, das Direktantriebs-Parallelleistungssystem in einem Parallelbetriebsmodus zu betreiben, in dem sowohl der Primärantrieb als auch der Motorgenerator angewiesen werden, der direkt angetriebenen Last über die Antriebswelle gleichzeitig mechanische Leistung zuzuführen.

2. Direktantriebs-Parallelleistungssystem nach Anspruch 1, wobei der Antriebsstrang ferner eine Kupplung (255) umfasst, die zwischen dem Primärantrieb (205) und dem Motorgenerator (210) entlang der Antriebswelle angeordnet ist, wobei die Kupplung (255) über die Leistungssystemsteuerung (230) gesteuert wird und wobei die Kupplung dazu ausgelegt ist, den Primärantrieb basierend auf von der Leistungssystemsteuerung empfangenen Anweisungen einzurücken und von der Antriebswelle (212) auszurücken.

3. Direktantriebs-Parallelleistungssystem nach einem der Ansprüche 1 und 2, ferner umfassend ein Batterieladegerät (217), das dazu ausgelegt ist, mit einer Netzleistungsquelle zum Laden der Batteriequelle (215) verbunden zu werden.

4. Direktantriebs-Parallelleistungssystem nach einem der Ansprüche 1-3, wobei der Generator des Motorgenerators (210) dazu ausgelegt ist, von dem Primärantrieb (205) erzeugte mechanische Leistung in elektrische Leistung umzuwandeln, und dazu ausgelegt ist, die erzeugte elektrische Leistung zum Laden der Batteriequelle an die Batteriequelle (215) zu übertragen.

5. Direktantriebs-Parallelleistungssystem nach einem der Ansprüche 1-4, wobei die Leistungssystemsteuerung (230) dazu ausgelegt ist, das Direktantriebs-Parallelleistungssystem in einem Primärantriebsbetriebsmodus zu betreiben, in dem der Primärantrieb (205) angewiesen wird, ohne Unterstützung von dem Motorgenerator der direkt angetriebenen Last (220) über die Antriebswelle (212) mechanische Leistung zuzuführen.

6. Direktantriebs-Parallelleistungssystem nach einem der Ansprüche 1-5, wobei die Leistungssystemsteuerung (230) dazu ausgelegt ist, das Direktantriebs-Parallelleistungssystem in einem Motorgeneratorbetriebsmodus zu betreiben, in dem der Motorgenerator (210) angewiesen wird, ohne Unterstützung von dem Primärantrieb (205) der direkt angetriebenen Last (220) über die Antriebswelle (212) mechanische Leistung zuzuführen.

7. Direktantriebs-Parallelleistungssystem nach einem der Ansprüche 1-6, wobei der Primärantrieb (205) eines von Folgendem ist: ein Dieselmotor, ein Benzinmotor, ein Druckerdgas(CNG)-Motor und ein Flüssigstickstoffgas(LNG)-Motor.

8. Direktantriebs-Parallelleistungssystem nach einem der Ansprüche 1-7, wobei die direkt angetriebene Last (220) ein Arbeitsfluidverdichter des Transportklimasteuersystems ist.

9. Verfahren zum Betreiben eines Direktantriebs-Parallelleistungssystems (200, 250) nach einem der Ansprüche 1-8 zur Leistungsversorgung eines Transportklimasteuersystems, wobei das Verfahren Folgendes umfasst:
Überwachen (305) eines Parameters eines Primärantriebs (205);
Vergleichen (310) des überwachten Primärantriebsparameters mit einem Primärantriebsschwellenwert;
wenn der überwachte Primärantriebsparameter kleiner als der Primärantriebsschwellenwert ist,
Betreiben (315) des Direktantriebs-Parallelleistungssystem in dem Parallelbetriebsmodus zur Leistungsversorgung der direkt angetriebenen Last (220) des Transportklimasteuersystems, und,
wenn der überwachte Primärantriebsparameter nicht kleiner als der Primärantriebsschwellenwert ist,
Betreiben (320) des Direktantriebs-Parallelleistungssystems in dem Primärantriebsbetriebsmodus zur Leistungsversorgung der direkt angetriebenen Last (220).

10. Verfahren nach Anspruch 9, wobei das Betreiben (315) des Direktantriebs-Parallelleistungssystem in dem Parallelbetriebsmodus Folgendes umfasst:
der Primärantrieb (205) des Direktantriebs-Parallelleistungssystems erzeugt mechanische Leistung; und
die Antriebswelle (212) des Direktantriebs-Parallelleistungssystems überträgt die erzeugte mechanische Leistung von dem Primärantrieb auf die direkt angetriebene Last (220).

11. Verfahren nach einem der Ansprüche 9 und 10, wobei das Betreiben (320) des Direktantriebs-Parallelleistungssystems in dem Primärantriebsbetriebsmodus Folgendes umfasst:
der Primärantrieb (205) des Direktantriebs-Parallelleistungssystems erzeugt mechanische Leistung;
der Motorgenerator (210) des Direktantriebs-Parallelleistungssystems erzeugt mechanische Leistung; und
die Antriebswelle (212) des Direktantriebs-Parallelleistungssystems überträgt gleichzeitig die erzeugte mechanische Leistung von dem Primärantrieb (205) und die erzeugte mechanische Leistung von dem Motorgenerator (210) auf die direkt angetriebene Last (220).

12. Verfahren nach einem der Ansprüche 9-11, das ferner Folgendes umfasst:
Bestimmen (325), ob eine Batteriequelle (215) des Direktantriebs-Parallelleistungssystems ausreichend geladen ist, wenn der überwachte Primärantriebsparameter nicht kleiner als der Primärantriebsschwellenwert ist;
wenn die Batteriequelle (215) ausreichend geladen ist, Betreiben (330) des Direktantriebs-Parallelleistungssystems in einem Motorgeneratorbetriebsmodus; und
wenn die Batteriequelle nicht ausreichend geladen ist, Betreiben (320) des Direktantriebs-Parallelleistungssystems in dem Primärantriebsbetriebsmodus.

13. Verfahren nach Anspruch 12, wobei das Betreiben (330) des Direktantriebs-Parallelleistungssystems in dem Motorgeneratorbetriebsmodus Folgendes umfasst:
der Motorgenerator (210) des Direktantriebs-Parallelleistungssystems erzeugt mechanische Leistung; und
die Antriebswelle (212) des Direktantriebs-Parallelleistungssystems überträgt die erzeugte mechanische Leistung von dem Motorgenerator (210) auf die direkt angetriebene Last (220).

14. Verfahren nach einem der Ansprüche 9-13, ferner umfassend, dass die Batteriequelle (215) des Direktantriebs-Parallelleistungssystems der elektrisch angetriebenen Last ("20) des Transportklimasteuersystems elektrische Leistung zuführt.

## Revendications

1. Système (200, 250) d'alimentation parallèle à entraînement direct destiné à alimenter un système de régulation climatique pour transport, le système d'alimentation parallèle à entraînement direct comportant :
un groupe motopropulseur (202) qui comprend une machine motrice (205), un moteur-générateur (210), et un arbre (212) d'entraînement, la machine motrice étant configurée pour générer une puissance mécanique servant à actionner une charge (220) directement entraînée du système de régulation climatique pour transport par l'intermédiaire de l'arbre d'entraînement, le moteur-générateur comprenant un moteur et un générateur, et le moteur étant configuré pour générer une puissance mécanique servant à actionner la charge directement entraînée par l'intermédiaire de l'arbre d'entraînement ;
une source (215) à batterie reliée électriquement au générateur du moteur-générateur, la source à batterie étant configurée pour alimenter en électricité le moteur du moteur-générateur et configurée pour alimenter en électricité une charge actionnée électriquement du système de régulation climatique pour transport ; et
une commande (230) de système d'alimentation configurée pour surveiller et commander le fonctionnement de la machine motrice, du moteur-générateur et de la source à batterie ;
**caractérisé en ce que** la commande de système d'alimentation est configurée pour faire fonctionner le système d'alimentation parallèle à entraînement direct dans un mode de fonctionnement parallèle dans lequel la machine motrice et le moteur-générateur ont tous deux pour consigne de fournir simultanément une puissance mécanique par l'intermédiaire de l'arbre d'entraînement à la charge directement entraînée.

2. Système d'alimentation parallèle à entraînement direct selon la revendication 1, le groupe motopropulseur comprenant en outre un embrayage (255) disposé entre la machine motrice (205) et le moteur-générateur (210) le long de l'arbre d'entraînement, l'embrayage (255) étant commandé par l'intermédiaire de la commande (230) de système d'alimentation et l'embrayage étant configuré pour embrayer et débrayer la machine motrice de l'arbre (212) d'entraînement sur la base d'instructions reçues en provenance de la commande de système d'alimentation.

3. Système d'alimentation parallèle à entraînement direct selon l'une quelconque des revendications 1 et 2, comportant en outre un chargeur (217) de batterie configuré pour se connecter à une source d'alimentation de desserte afin de charger la source (215) à batterie.

4. Système d'alimentation parallèle à entraînement direct selon l'une quelconque des revendications 1 à 3, le générateur du moteur-générateur (210) étant configuré pour convertir une puissance mécanique générée par la machine motrice (205) en puissance électrique et étant configuré pour transférer la puissance électrique générée à la source (215) à batterie afin de charger la source à batterie.

5. Système d'alimentation parallèle à entraînement direct selon l'une quelconque des revendications 1 à 4, la commande (230) de système d'alimentation étant configurée pour faire fonctionner le système d'alimentation parallèle à entraînement direct dans un mode de fonctionnement en machine motrice dans lequel la machine motrice (205) a pour consigne de fournir une puissance mécanique par l'intermédiaire de l'arbre (212) d'entraînement à la charge (220) directement entraînée sans assistance du moteur-générateur.

6. Système d'alimentation parallèle à entraînement direct selon l'une quelconque des revendications 1 à 5, la commande (230) de système d'alimentation étant configurée pour faire fonctionner le système d'alimentation parallèle à entraînement direct dans un mode de fonctionnement en moteur-générateur dans lequel le moteur-générateur (210) a pour consigne de fournir une puissance mécanique par l'intermédiaire de l'arbre (212) d'entraînement à la charge (220) directement entraînée sans assistance de la machine motrice (205).

7. Système d'alimentation parallèle à entraînement direct selon l'une quelconque des revendications 1 à 6, la machine motrice (205) étant une machine parmi: un moteur diesel, un moteur à essence, un moteur à gaz naturel comprimé (CNG) et un moteur à gaz d'azote liquide (LNG).

8. Système d'alimentation parallèle à entraînement direct selon l'une quelconque des revendications 1 à 7, la charge (220) directement entraînée étant un compresseur de fluide de travail du système de régulation climatique pour transport.

9. Procédé d'exploitation d'un système (200, 250) d'alimentation parallèle à entraînement direct selon l'une quelconque des revendications 1 à 8 pour alimenter un système de régulation climatique pour transport, le procédé comportant les étapes consistant à :
surveiller (305) un paramètre de machine motrice (205) ; comparer (310) le paramètre de machine motrice surveillé à un seuil de machine motrice ;
lorsque le paramètre de machine motrice surveillé est inférieur au seuil de machine motrice,
faire fonctionner (315) le système d'alimentation parallèle à entraînement direct dans le mode de fonctionnement parallèle pour actionner la charge (220) directement entraînée du système de régulation climatique pour transport, et
lorsque le paramètre de machine motrice surveillé n'est pas inférieur au seuil de machine motrice,
faire fonctionner (320) le système d'alimentation parallèle à entraînement direct dans le mode de fonctionnement en machine motrice pour actionner la charge (220) directement entraînée.

10. Procédé selon la revendication 9, le fait de faire fonctionner (315) le système d'alimentation parallèle à entraînement direct dans le mode de fonctionnement parallèle comprenant :
la génération d'une puissance mécanique par la machine motrice (205) du système d'alimentation parallèle à entraînement direct ; et
le transfert, par l'arbre (212) d'entraînement du système d'alimentation parallèle à entraînement direct, de la puissance mécanique générée de la machine motrice à la charge (220) directement entraînée.

11. Procédé selon l'une quelconque des revendications 9 et 10, le fait de faire fonctionner (320) le système d'alimentation parallèle à entraînement direct dans le mode de fonctionnement en machine motrice comprenant :
la génération d'une puissance mécanique par la machine motrice (205) du système d'alimentation parallèle à entraînement direct ;
la génération d'une puissance mécanique par le moteur-générateur (210) du système d'alimentation parallèle à entraînement direct ; et
le transfert simultané, par l'arbre (212) d'entraînement du système d'alimentation parallèle à entraînement direct, de la puissance mécanique générée provenant de la machine motrice (205) et de la puissance mécanique générée provenant du moteur-générateur (210) à la charge (220) directement entraînée.

12. Procédé selon l'une quelconque des revendications 9 à 11, comportant en outre :
le fait de déterminer (325) si une source (215) à batterie du système d'alimentation parallèle à entraînement direct est suffisamment chargée lorsque le paramètre de machine motrice surveillé n'est pas inférieur au seuil de machine motrice ;
lorsque la source (215) à batterie est suffisamment chargée, le fait de faire fonctionner (330) le système d'alimentation parallèle à entraînement direct dans un mode de fonctionnement en moteur-générateur ; et
lorsque la source à batterie n'est pas suffisamment chargée, le fait de faire fonctionner (320) le système d'alimentation parallèle à entraînement direct dans le mode de fonctionnement en machine motrice.

13. Procédé selon la revendication 12, le fait de faire fonctionner (330) le système d'alimentation parallèle à entraînement direct dans le mode de fonctionnement en moteur-générateur comprenant :
la génération d'une puissance mécanique par le moteur-générateur (210) du système d'alimentation parallèle à entraînement direct ; et
le transfert, par l'arbre (212) d'entraînement du système d'alimentation parallèle à entraînement direct, de la puissance mécanique générée du moteur-générateur (210) à la charge (220) directement entraînée.

14. Procédé selon l'une quelconque des revendications 9 à 13, comportant en outre la fourniture, par la source (215) à batterie du système d'alimentation parallèle à entraînement direct, d'une puissance électrique à la charge actionnée électriquement ("20) du système de régulation climatique pour transport.
